Europäisches Patentamt

European Patent Office

Office européen des brevets

(19)

(11) Veröffentlichungsnummer: **0 250 944 B1**

## (12) EUROPÄISCHE PATENTSCHRIFT

(45) Veröffentlichungstag der Patentschrift: **09.09.92**

(51) Int. Cl.⁵: **H04N 5/60**

(21) Anmeldenummer: **87108270.7**

(22) Anmeldetag: **09.06.87**

(54) **Einrichtung zur Steuerung der Betriebsart eines Stereodekoders.**

(30) Priorität: **01.07.86 DE 3622016**

(43) Veröffentlichungstag der Anmeldung:
**07.01.88 Patentblatt 88/01**

(45) Bekanntmachung des Hinweises auf die
Patenterteilung:
**09.09.92 Patentblatt 92/37**

(84) Benannte Vertragsstaaten:
**DE FR GB IT**

(56) Entgegenhaltungen:
**DE-A- 2 535 494**
**DE-A- 3 137 535**
**DE-A- 3 242 159**
**GB-A- 2 122 458**

**PATENT ABSTRACTS OF JAPAN, Band 6, Nr.
77 (E-106)[955], 14. Mai 1982; & JP-A-57 14
262 (SHIN NIPPON DENKI K.K.) 25-01-1982**

(73) Patentinhaber: **GRUNDIG E.M.V. Elektro-
Mechanische Versuchsanstalt Max Grundig
holländ. Stiftung & Co. KG.
Kurgartenstrasse 37
W-8510 Fürth/Bay.(DE)**

(72) Erfinder: **Rehak, Manfred
GRUNDIG E.M.V Max Grundig holländ Kurgartenstr. 37
W-8510 Fürth/Bayern(DE)**

EP 0 250 944 B1

**Beschreibung**

Die vorliegende Erfindung betrifft eine Einrichtung zur Steuerung der Betriebsart eines Stereodekoders eines nach dem Zwei-Tonträger-Verfahren arbeitenden Fernsehempfängers mit den im Oberbegriff des Anspruchs 1 angegebenen Merkmalen.

In letzter Zeit strahlen die Fernsehsender in zunehmendem Maße die eine Bildsendung begleitende Toninformation nach dem sogenannten "Zwei-Tonträger-Verfahren" aus. Bei diesem Verfahren hat der Tonträger 1 (TT 1) einen Abstand von 5.5 MHz und der Tonträger 2 (TT 2) einen Abstand von 5.742 MHz zum Bildträger. Beide Tonträger sind mit der jeweiligen Nf-Information frequenzmoduliert. Um bei einem derartigen Übertragungsverfahren erkennen zu können, ob eine Mon-, Zweiton- oder Stereosendung vorliegt, wird senderseitig ein 55 kHz-Betriebsart-Kennsignal bzw. Pilotsignal erzeugt, mit welchem der zweite Tonträger zusätzlich frequenzmoduliert wird. Das Betriebsart-Kennsignal wird amplitudenmoduliert, und zwar mit $f_{Stereo}$ = 117.5 Hz bei Stereosendungen und mit $f_{Zweiton}$ = 274.1 Hz bei Zweitonsendungen. Bei Monosendungen ist keine Amplitudenmodulation des Kennsignals vorhanden. Empfangsseitig wird dieses Betriebsart-Kennsignal ausgewertet und zur Steuerung der Betriebsart des Stereodecoders (Mono, Stereo, Zweiton) verwendet. Die Auswertung kann beispielsweise unter Benutzung von Bandpässen für 117.5 Hz und 274.1 Hz erfolgen. Nach Gleichrichtung und Siebung erhält man aus den Kennsignalen die gewünschte Steuerinformation.

In der Praxis hat sich jedoch gezeigt, daß insbesondere bei empfindlichen Auswerteschaltungen beim Vorliegen von Monosendern oft fälschlicherweise "Stereo" erkannt wird, so daß der Stereodekoder in die falsche Betriebsart umgeschaltet wird, was zu Störgeräuschen (Rauschen, Brummen) bei der Tonwiedergabe führt. Diese Fehlschaltungen sind darauf zurückzuführen, daß durch die Addition unerwünschte Effekte eine Stereokennung vorgetäuscht wird.

Derartige Fehlschaltungen könnten durch eine andere Dimensionierung der Auswerteschaltung vermieden werden, bei der man allerdings in Kauf nehmen müßte, daß das Kennsignal bei vergleichsweise schlechtem Empfang nicht mehr erkannt und ausgewertet würde. Dies wäre insbesondere bei Zweitonsendungen von Nachteil, da der gewünschte zweite Ton verloren ginge bzw. nicht mehr wiedergegeben würde.

Der vorliegenden Erfindung liegt die Aufgabe zugrunde, eine Einrichtung der im Oberbegriff des Anspruchs 1 angegebenen Art derart auszugestalten, daß Fehlschaltungen der Betriebsart des Stereodekoders vermieden werden, ohne daß die Empfindlichkeit der Kennsignalauswerteschaltung verringert werden muß.

Diese Aufgabe wird durch die im kennzeichnenden Teil des Anspruchs 1 angegebenen Merkmale gelöst. Vorteilhafte Ausgestaltungen ergeben sich aus den Unteransprüchen.

Aus der DE-OS 32 42 159 ist bereits eine Einrichtung zur Signalarterkennung bei Mehrtonsignalen auf Niederfrequenzebene bekannt. Die bekannte Einrichtung ist insbesondere zur Wiedergabe magnetisch aufgezeichneter Tonsignale geeignet, da bei der magnetischen Aufzeichnung die Kennfrequenzen, die einem Hilfsträger im Bereich um 55 kHz aufmoduliert sind, nicht mit zur Aufzeichnung gelangen und damit bei der Wiedergabe nicht ausgewertet werden können. Bei der bekannten Einrichtung werden die beiden mehr oder weniger korrelierten Teilsignale einer stereophonen, monophonen oder zweisprachigen Toninformation (ohne vorherige Ausfilterung der Wechselstromanteile) einem Differenzverstärker zugeführt, dessen Ausgangssignal gleichgerichtet und zur Bildung von Schaltsignalen ausgewertet wird, die ein Maß für den Korrelationsgrad der Teilsignale darstellen. Diese Schaltsignale können gegebenenfalls, wie auf Seite 7 der DE-OS 32 42 159 angegeben ist, mit den Schaltspannungen additiv kombiniert werden, die aus den Kennfrequenzen (Betriebsart-Kennsignale, Pilotsignale) bei der Fernseh-Stereoton-Übertragung am Ausgang der Empfängerdecoder gebildet werden. Bei ungünstigen Betriebsverhältnissen können auch bei einer derartigen Einrichtung Fehlschaltungen auftreten, da die durch Auswertung der Kennfrequenzen ermittelte Schaltspannung fehlerhaft sein kann (z.B. bei Ansagen während Musiksendungen).

Weiterhin ist aus der GB-A-2122458 eine Einrichtung zur Steuerung der Betriebsart eines Stereodekoders eines nach dem Zwei-Tonträger-Verfahren arbeitenden Fernsehempfängers bekannt, bei dem dem zweiten Tonträger ein Betriebsart-Kennsignal vorgegebener Frequenz aufmoduliert ist, und bei dem die Betriebsartsteuerung des Stereodekoders durch Auswertung des Kennsignals erfolgt. Weiterhin ist bei der bekannten Einrichtung eine Betriebsart "Zwangsmono" vorgesehen, die dann eingeleitet wird, wenn das am Ausgang des im zweiten Tonkanal angeordneten Ton-ZF-Verstärkers vorliegende Rauschen einen vorgegebenen Pegel überschreitet.

Im Gegensatz hierzu besteht ein wesentliches Merkmal der vorliegenden Erfindung darin, immer dann, wenn durch Auswertung der Gleichspannungsanteile der beiden Tonsignale ein Monosender identifiziert wurde, den Stereodekoder des Fernsehempfängers unabhängig von der Auswertung des Kennsignals in die Betriebsart "Mono" umzuschalten. Die übliche Auswertung des Kennsignals hat nur dann Einfluß auf die Betriebsartauswahl, wenn die Auswertung der Gleichspannungsanteile der beiden Tonsignale ergibt, daß kein Monosender vorliegt.

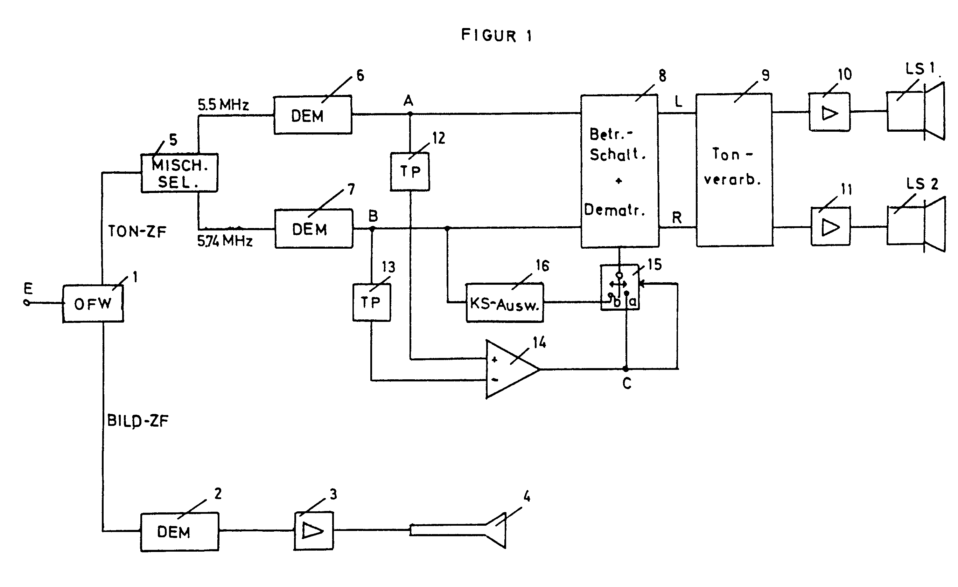

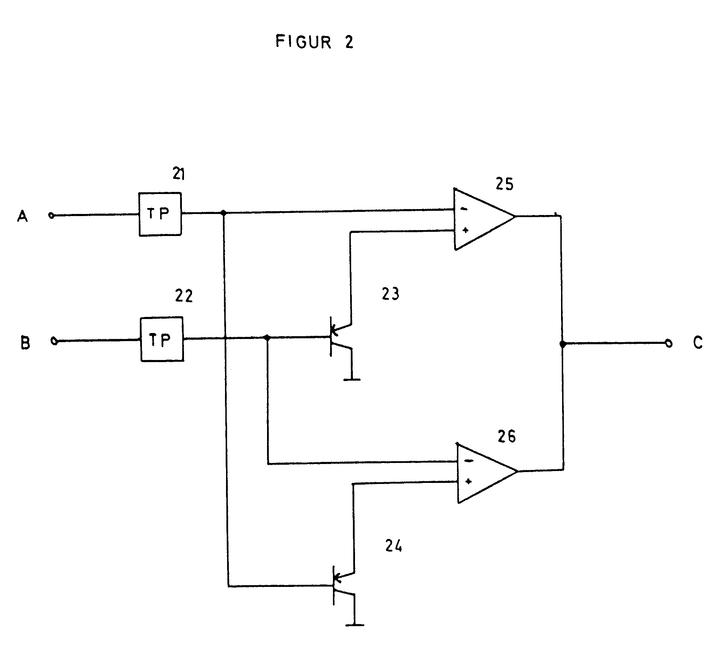

Im folgenden wird die vorliegende Erfindung anhand der Figuren 1 und 2 näher erläutert. Es zeigt

Figur 1 ein Ausführungsbeispiel für einen Teil eines Fernsehempfängers, der die beanspruchte Einrichtung aufweist und

Figur 2 eine verbesserte Ausführungsform für die beanspruchte Einrichtung.

Am Eingang E der in Figur 1 gezeigten Einrichtung liegt das Bild- und das Tonsignal in der ZF-Lage an. Der Bild-ZF-Träger liegt bei 38.9 MHz und die beiden Tonträger bei 33.16 bzw. 33.4 MHz. in einem Oberflächenwellenfilter 1 wird das Bild-ZF-Signal vom Ton-ZF-Signal getrennt.

Das Bild-ZF-Signal wird im Bilddemodulator 2 demoduliert und über einen Bildverstärker 3 der Bildröhre 4 zugeführt.

Aus dem Ton-ZF-Signal werden in einer Schaltung 5 durch Mischung mit dem Bildträger (38.9 MHz) die frequenzmodulierten Tonträger von 5.5 MHz und 5.74 MHz gewonnen, mittels geeigneter Selektionsmittel auf die beiden Tonkanäle 1 und 2 verteilt und dort in den Demodulatoren 6 bzw. 7 demoduliert.

Die demodulierten Tonsignale gelangen an einen Betriebsartumschalter, der in Abhängigkeit davon, ob Mono- Stereo- oder Zeitonbetrieb vorliegt, für eine korrekte Dematrizierung der Tonsignale sorgt, die im vorliegenden Ausführungsbeispiel ebenfalls in der Schaltung 8 stattfindet. Die Ausgangssignale der Dematrix werden einer Schaltung 9 zugeführt, in der eine Lautstärke-, Höhen-, Tiefen- und Balanceregelung, etc., erfolgt, und über Tonendstufen 10 und 11 an die Lautsprecher LS 1 und LS 2 geleitet.

Die Identifikation der Toninformation zur Steuerung des Betriebsartumschalters wird wie folgt vorgenommen: Die Ausgangssignale der beiden Demodulatoren 6 und 7 werden über Tiefpässe 12 und 13 geleitet, die für die in den Tonsignalen enthaltenen Wechselstromanteile undurchlässig sind. Die am Ausgang der Tiefpässe 12 und 13 anliegenden Gleichspannungsanteile der Tonsignale werden unterschiedlichen Eingängen eines Differenzverstärkers 14 zugeführt. Das ermittelte Differenzsignal gelangt einerseits an die Anschlußklemme a eines Schalters 15 und wird andererseits auch zur Steuerung des Schalters 15 verwendet.

In der Praxis ist ein Eingang des Differenzverstärkers gegenüber dem anderen Eingang vorgespannt. Dadurch ist gewährleistet, daß der Differenzverstärker auch bei annähernd gleichen Eingangssignalen (Stereosender) ein definiertes Schaltsignal liefert.

Liegt die Amplitude des ermittelten Differenzsignals über einen vorgebbaren Schwellenwert, so liegt ein Monosender vor und das bewegliche Ende des Schalters wird mit der Anschlußklemme (a) verbunden. Dies hat zur Folge, daß das ermittelte Differenzsignal über den Schalter 15 an den Betriebsartumschalter gelangt und den Stereodekoder des Fernsehempfängers in die Betriebsart "Mono" umschaltet. Das Ausgangssignal einer Schaltung 16 zur Kennsignalauswertung, welches an der Anschlußklemme b des Schalters 15 anliegt, ist in diesem Fall vom Betriebsartumschalter getrennt, beeinflußt also die Betriebsartauswahl nicht.

Ist die Amplitude des ermittelten Differenzsignals kleiner als der vorgegebene Schwellenwert, so liegt ein Stereosender vor und das bewegliche Ende des Schalters 15 wird mit der Anschlußklemme b verbunden. Das hat zur Folge, daß die Betriebsartauswahl in Abhängigkeit vom Ausgangssignal der Schaltung 16 zur Kennsignalauswertung erfolgt. Diese Kennsignalauswertung kann auf herkömmliche Art und Weise erfolgen (siehe beispielsweise Zeitschrift "Fernseh- und Kino-Technik", 38. Jg., Nr. 2/1984, Seite 63, rechte Spalte, bis Seite 64, linke Spalte oben).

Der Erfindung liegt die Erkenntnis zugrunde, daß bei einem Monosender (also fehlendem 2. Tonträger) in der Schaltung 5 (Selektion) ein Übersprechen vom Tonkanal 1 in den Tonkanal 2 auftritt. Dieses Übersprechen verursacht am Ausgang des Demodulators 7 eine Richtgleichspannung, welche stark von der Referenzgleichspannung des ersten Tonkanals ( = Gleichspannung am Ausgang des Demodulators 6) abweicht. Diese Abweichung wird im Differenzverstärker ermittelt und zur Betriebsartumschaltung verwendet.

Die Figur 2 zeigt eine verbesserte Ausführungsform für die beanspruchte Einrichtung, die alternativ zu den Bauteilen 12, 13 und 14 zwischen die Klemmen A, B und C des in Figur 1 gezeigten Fernsehempfängers eingefügt werden kann. Bei dieser verbesserten Ausführungsform wird die Gleichspannungskomponente des Tonsignals im Tonkanal 1 dem negativen Eingang eines Differenzverstärkers 25 und gleichzeitig über einen pnp-Transistor 24 dem positiven Eingang eines weiteren Differenzverstärkers 26 zugeführt. Die Gleichspannungskomponente des Tonsignals im Tonkanal 2 wird über einen weiteren pnp-Transistor 23 an den positiven Eingang des Differenzverstärkers 25 und gleichzeitig an den netativen Eingang des Differenzverstärkers 26 gelegt. Die Ausgänge beider Differenzverstärker sind mit der Anschlußklemme C verbunden. Diese Ausführungsform hat den Vorteil, daß Amplitudenunterschiede der beiden Tonsignale sowohl in positiver als auch in negativer Richtung ausgewertet werden können. Dies ist bei-

3

spielsweise bei Mehrnormenempfängern notwendig.

## Patentansprüche

1. Einrichtung zur Steuerung der Betriebsart eines Stereodekoders eines nach dem Zwei-Tonträger-Verfahren arbeitenden Fernsehempfängers, bei dem dem zweiten Tonträger ein Betriebsart-Kennsignal vorgegebener Frequenz aufmoduliert ist, und bei dem die Betriebsartsteuerung des Stereodekoders durch Auswertung des Kennsignals erfolgt, **dadurch gekennzeichnet**, daß zur Unterscheidung von Monosendern und Stereosendern die Gleichsannungsanteile der an den Ausgängen der in den beiden Tonkanälen angeordneten Demodulatoren (6,7) erhaltenen Tonsignale einem Differenzverstärker (14) zugeführt werden und das Ausgangssignal des Differenzverstärkers (14) beim Erkennen eines Monosenders den Stereodekoder unabhängig von der Kennsignalauswertung (16) in die Betriebsart "Mono" schaltet.

2. Einrichtung nach Anspruch 1, gekennzeichnet durch einen Schalter (15), der in Abhängigkeit vom Ausgangssignal des Differenzverstärkers (14) entweder für das Ausgangssignal des Differenzverstärkers (14) oder für das Ausgangssignal der Schaltung (16) zur Kennsignalauswertung durchlässig ist.

3. Einrichtung nach Anspruch 1 oder 2, dadurch gekennzeichnet, daß der Differenzverstärker als Schaltung (23, 24, 25, 26) aufgebaut ist, die Amplitudenunterschiede der ihr zugeführten Signale sowohl in positiver als auch in negativer Richtung auswerten kann.

## Claims

1. Device for controlling the mode of a stereo decoder of a television receiver operating in accordance with the method of two audio subcarriers, in which a mode identification signal of predetermined frequency is modulated onto the second audio subcarrier and in which the mode of the stereo decoder is controlled by evaluation of the identification signal, characterised in that, in order to distinguish between mono transmitters and stereophonic transmitters, the direct-voltage components of the audio signals obtained at the outputs of the demodulators (6, 7) arranged in the two audio channels are supplied to a differential amplifier (14) and the output signal of the differential amplifier (14) switches the stereo decoder to the "mono" operating mode independently of the identification signal evaluation (16) when a mono transmitter is recognised.

2. Device according to Claim 1, characterised by a switch (15) which is transparent either to the output signal of the differential amplifier (14) or to the output signal of the circuit (16) for identification signal evaluation as a function of the output signal of the differential amplifier (14).

3. Device according to Claim 1 or 2, characterised in that the differential amplifier is constructed as a circuit (23, 24, 25, 26) which can evaluate the amplitude differences of the signals supplied to it both in the positive and in the negative direction.

## Revendications

1. Dispositif pour commander le type de fonctionnement d'un décodeur stéréo d'un récepteur de télévision fonctionnant selon le procédé à deux porteuses son et dans lequel la seconde porteuse son est modulée par un signal caractéristique de type de fonctionnement possédant une fréquence prédéterminée et la commande du type de fonctionnement du décodeur stéréo est réalisée au moyen d'une évaluation du signal caractéristique, caractérisé en ce que, pour différencier des émetteurs mono et des émetteurs stéréo, les composantes de tension continue des signaux acoustiques délivrés aux sorties des démodulateurs (6,7) situés dans les deux canaux son sont envoyées à un amplificateur différentiel (14) et, lors de l'identification d'un émetteur mono, le signal de sortie de l'amplificateur différentiel (14) commute le décodeur stéréo sur le type de fonctionnement "mono", indépendamment de l'évaluation (16) du signal caractéristique.

2. Dispositif selon la revendication 1, caractérisé par un commutateur (15) qui, en fonction du signal de sortie de l'amplificateur différentiel (14), transmet soit le signal de sortie de l'amplificateur différentiel (14), soit le signal de sortie du circuit (16) d'identification du signal caractéristique.

3. Dispositif selon la revendication 1 ou 2, caractérisé en ce que l'amplificateur différentiel est réalisé sous la forme d'un circuit (23,24,25,26), qui peut évaluer des différences d'amplitude des signaux qui lui sont envoyés, aussi bien dans le sens positif que dans le sens négatif.

FIGUR 1

LS 1

LS 2

10

11

9  Ton-verarb.

L

R

8  Betr.-Schalt. + Dematr.

15  a / b

C

16  KS-Ausw.

14

12  TP

A

13  TP

B

6  DEM

7  DEM

5.5 MHz

5,74 MHz

5  MISCH. SEL.

TON-ZF

1  OFW

E

BILD-ZF

2  DEM

3

4

FIGUR 2

EP 0 250 944 B1